(19) **Europäisches Patentamt**
**European Patent Office**
**Office européen des brevets**

(11) **EP 2 107 522 B1**

(12) **EUROPEAN PATENT SPECIFICATION**

(45) Date of publication and mention
of the grant of the patent:
**05.01.2011 Bulletin 2011/01**

(51) Int Cl.:
***G06T 7/20*** *(2006.01)*

(21) Application number: **09100209.7**

(22) Date of filing: **27.03.2009**

(54) **Method for detection of scene changes in a video picture sequence**

Verfahren zur Erkennung von Szenenänderungen in einer Videobildsequenz

Procédé de détection de changement de scène dans une séquence d'images vidéo

(84) Designated Contracting States:
**DE FR GB**

(30) Priority: **02.04.2008 FR 0852165**

(43) Date of publication of application:
**07.10.2009 Bulletin 2009/41**

(73) Proprietor: **Thomson Licensing**
**92130 Issy-les-Moulineaux (FR)**

(72) Inventors:
• **Babonneau, Jean-Yves**
**35590 La Chapelle Thouarault (FR)**
• **Maheo, Florent**
**35235 Thorigne Fouillard (FR)**
• **Touchais, Dominique**
**35340 La Bouexière (FR)**

(74) Representative: **Berthier, Karine**
**THOMSON**
**European Patent Operations**
**46 Quai Alphonse Le Gallo**
**92648 Boulogne Cedex (FR)**

(56) References cited:
**EP-A- 0 951 182**     **US-A1- 2002 135 697**
**US-A1- 2004 204 919**     **US-A1- 2004 252 230**
**US-A1- 2005 128 355**

• **DANTCHEVA A: "Video Quality Evolution" THESIS, [Online] April 2007 (2007-04), pages 1-70, XP002501289 TU Wien, Fakultät für Elektrotechnik und Informationstechnik Retrieved from the Internet: URL:http://publik.tuwien.ac.at/files/pub-e t_12222.pdf> [retrieved on 2008-10-20]**
• **CHUNG-CHI LIN ET AL: "Motion Adaptive De-interlacing with Local Scene Changes Detection" INNOVATIVE COMPUTING, INFORMATION AND CONTROL, 2007. ICICIC '07. SECOND INTERNATIONAL CONFERENCE ON, IEEE, PI, 1 September 2007 (2007-09-01), pages 142-142, XP031200198 ISBN: 978-0-7695-2882-3**
• **EL-QAWASMEH E ET AL: "A SURVEY OF DIGITAL VIDEO SHOT BOUNDARY DETECTION ALGORITHMS" PROCEEDINGS OF THE IASTED INTERNATIONAL CONFERENCE APPLIEDINFORMATICS. INTERNATIONAL SYMPOSIUM ON SOFTWARE ENGINEERING, DATABASES AND APPLICATIONS, XX, XX, 1 January 2001 (2001-01-01), pages 497-502, XP009042081**

EP 2 107 522 B1

**Description**

## SCOPE OF THE INVENTION

The present invention relates to the domain of coding of video pictures and concerns a method for detection of scene changes in video picture sequences, better known as "cuts".

## PRIOR ART

The prior art knows methods for detection of scene changes or shot changes exploiting the temporal correlation. The correlation is based for example on the sum of differences in the luminance of pixels of the same coordinates, between two successive pictures in the picture sequence. However, a movement in the sequence risks being interpreted as a shot change. One solution to this problem consists in establishing a histogram on the picture. This histogram consists in the measurement of the number of pixels or the number of occurrences in the picture for each luminance value. The marker is defined by the luminance values, for example 0 to 255; on the abscissas axis and by the number of occurrences on the ordinate axis. The curve obtained is compared with that of the following picture and their similarity enables declaring a shot change or not. This solution however is not ideal, particularly for erratic movements, or the disappearance or appearance of objects in the scene leading to the appearance or occlusion of pixels behind the objects.

The exploitation of motion vector fields, for example the non-continuity of motion from one picture to another, does not enable reliable detection due to the fact that the motion vectors are not always representative of physical motion, in particular for motion estimation by "block matching", based on the correlation rate of a block of a current picture with blocks of a search window of a previous picture.

The conference paper by El-Qawasmeh et al.: "A survey of digital video shot boundary detection algorithms" Proceedings of the IASTED International Conference, February 18-21, 2002, Innsbruck, AT, 18 February 2002, pages 497-502 describes a scene change detection method which is based on absolute intensity differences between pixels of consecutive video frames. The method takes into account all pixels of the input video image when computing the pixel differences.

## SUMMARY OF THE INVENTION

One of the purposes of the invention is to overcome the aforementioned disadvantages. The purpose of the invention is a method for the detection of changes of scene in a video picture sequence, **characterised in that** it comprises the following steps:

- detection of non-static pixels in a picture, with respect to a preceding picture,
- calculation of the number of non-static pixels in the picture,
- calculation of the variation, in absolute value, of the number of non-static pixels for the picture, corresponding to the difference between the number of non-static pixels of the picture and that of the preceding picture,
- detection of a peak in the variation, the picture relative to the variation leading to the peak then being the first picture of the new scene.

According to a particular implementation, the peak detection step comprises a calculation step of the difference of the variation for a picture with respect to at least one preceding picture and with respect to at least one following picture, the detection being obtained if the differences are greater than a predetermined threshold.

According to a particular implementation, the calculations of difference are carried out for pictures noted as T-(n-1) to T found inside a temporal sliding window bounding a predefined number n of pictures, a peak being declared when the difference, for a picture at a predefined position in the window and for the following picture is greater than a threshold, for the set of pictures in the window other than these two pictures.

According to a particular implementation, the number n is equal to 8, the pictures of the window being pictures noted as T-7 to T, the two pictures being the pictures noted as T-3 and T-2.

According to a particular implementation, the picture at a predefined position is the picture at position T-(n/2-1), a picture mean luminance is calculated for the n/2 first pictures of the window and for the n/2 last pictures of the window, these mean luminance values are compared and the threshold is a function of this comparison result.

According to a particular implementation, the detection step of static areas comprises a comparison of a block of pixels of a current picture with a co-localised block of a preceding picture, the central pixel of the block of the current picture being declared static if the sum of absolute values of pixel luminance differences relating to the neighbours of the central pixel is less than a predetermined threshold.

According to a particular implementation, the block of pixels is a block of 3x3 pixels and the pixel at the centre is declared static if the sum of absolute values of differences carried out for the pixels around the pixel at the centre is less than a predetermined threshold.

According to a particular implementation, the video picture sequence is a sequence of interlaced pictures and the detection of static areas is carried out on fields of the same parity.

The method performs a detection of static areas in the picture, static areas with respect to a preceding picture. A calculation of the number of pixels not belonging to the static area is carried out for each picture then of the variation of this number from one picture to another. Detection of a peak in this variation according to time, that is an increase or decrease, beyond a certain threshold, of the number of pixels of non-static areas, studied over several pictures of the sequence, enables determination of a shot change. One advantage of this solution is to overcome motion in the scene and therefore to provide more reliable results.

This method is based on the fact that, during a scene change, generally there are not found the same number of pixels in the static or non-static areas.

## BRIEF DESCRIPTION OF THE DRAWINGS

Other specific features and advantages will emerge clearly from the following description, the description provided as a non-restrictive example and referring to the annexed drawings wherein:

- figure 1 shows, a detection circuit according to the invention,
- figure 2 shows, correlation windows of a picture T and T-1,
- figure 3 shows, the variation in time of the number of non-static pixels.

## DETAILED DESCRIPTION OF THE EMBODIMENTS OF THE INVENTION

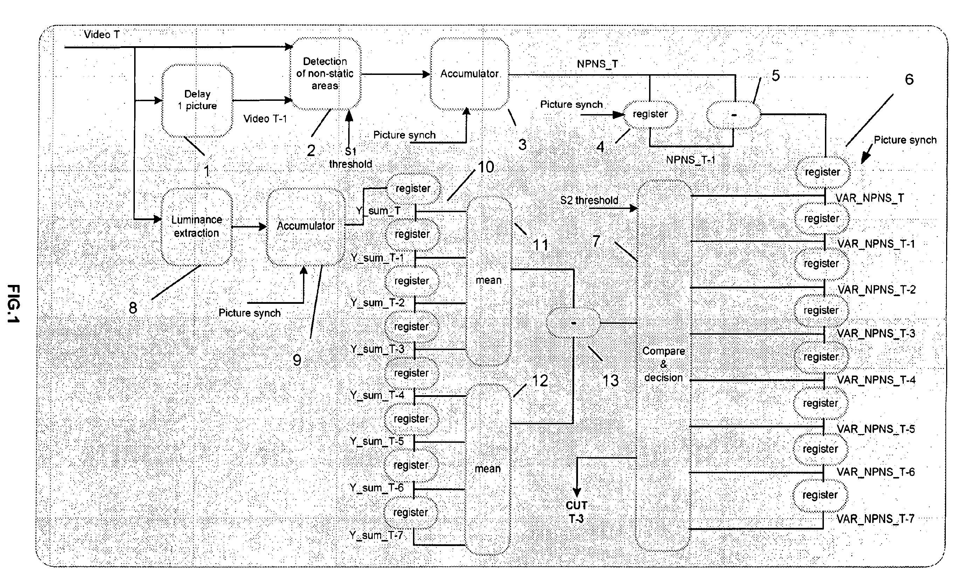

Figure 1 represents diagrammatically, the different elements of a circuit implementing the method. The video picture sequence considered is, in the example, a succession of progressive pictures. The video input of the circuit, that receives the video pictures, is connected to a picture delay circuit referenced as 1 that memorises a picture of the sequence to transmit it with a picture delay on a second non-static pixel detection circuit input 2.The video input is also connected directly to the second non-static pixel detection circuit input 2. This circuit carries out a detection of non-static pixels in the current picture, detection that is performed between the current video picture at instant T and the preceding picture of the sequence at instant T-1.

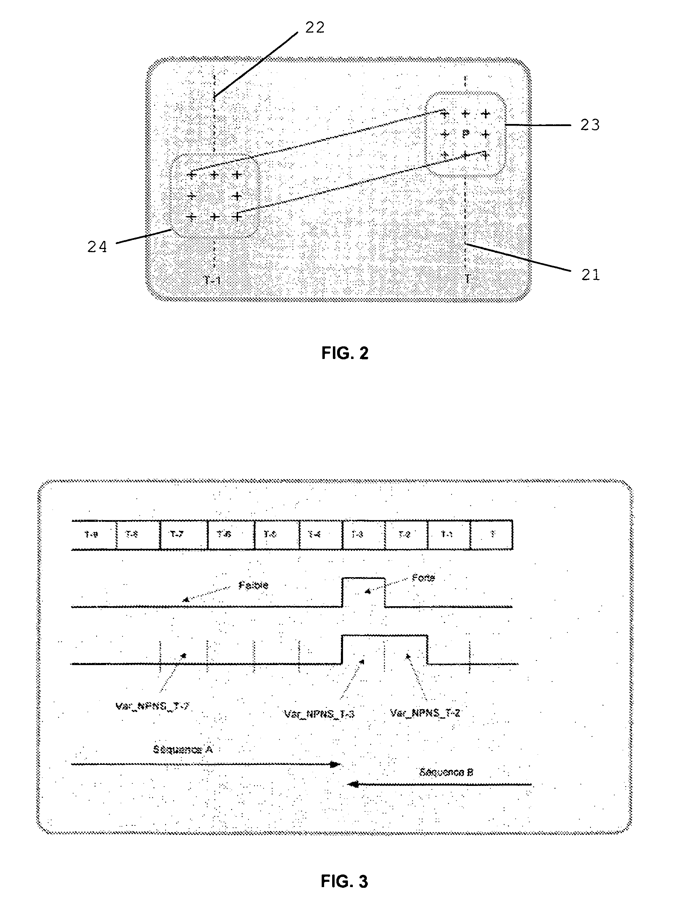

Figure 2 symbolizes in dotted lines a current picture referenced 21 at the instant T and a preceding picture referenced 22 at the instant T-1. The processing of these pictures is carried out using windows with dimensions of 3x3 pixels, the pixel at the centre of the window being the current pixel P. For a window 23 of picture 21, a co-located window 24 of picture 22, that is, of the same emplacement or coordinates, is considered. The sum of absolute values of the luminance differences between these two windows, pixel by pixel, is performed for the 8 pixels around the central pixel. This sum or SAD (Sum of Absolute Differences) is divided by 8 to provide a mean value for the current picture T. If this value is less than a predetermined threshold S1, the value transmitted on a third input of the non-static pixel detection circuit 2, the current point P is labelled as belonging to a static area, as a static pixel. In the contrary case, it is considered to belong to a non-static area, as a non-static pixel. This operation is carried out on each of the pixels of the current picture. A "static" or "non-static" label is thus attributed to each of the pixels of the picture. The non-static pixel or PNS information corresponds for example to the binary value unit and the static pixel information to the binary value zero. The output of the non-static pixel detection circuit 2 is connected to the input of an accumulator 3 to transmit this binary information to it. This latter receives, on a second input, a picture synchronisation or picture reset to zero signal, enabling to reset to zero the content of the accumulator when processing a new picture. Thus, in accordance with the processing of current picture pixels, an accumulation of the number of pixels declared non-static is carried out by this accumulator to provide, in the processing of the picture, a number of non-static pixels NPNS for the complete picture.

The information relating to the number of non-static pixels in the current picture T exiting the accumulator 3, NPNS_T, is transmitted on a first register input 4 and on a first subtracter 5. The second input of register 4 receives a picture synchronisation signal that memorises in the register, at each new picture, the NPNS_T information. The memorised information of the preceding picture is, during this recording, extracted from the register to be transmitted on a second input of the subtracter 5. Hence, at the end of processing of the picture T, the subtracter receives on its first input the NPNS_T information from the accumulator and on its second input the NPNS_T-1 information relating to the preceding picture from the register. The signal at the output of the subtracter corresponds to the variation of the number of non-static pixels, of the picture T-1 to picture T, attributed to the picture T and called VAR_NPNS_T or more simply V(T).

This signal is transmitted to a first register of a succession of 8 elementary registers or memories connected in series to form an 8 cell offset register referenced 6, triggered by the picture clock. At the output of each elementary register the VAR_NPNS information is thus available for the pictures T-7 to T. This variation of the number of non-static pixels information on the 8 pictures is transmitted to a comparison and decision circuit referenced 7.

Figure 3 shows a set of timing diagrams relating to a succession of pictures of the video picture sequence. On the first line is represented a sequence of pictures of the picture T-9 up to the current picture T. The second line represents the NPNS number of non-static pixels for each picture, from the picture T-9 to picture T, the third line shows the unsigned variation of this number, VAR_NPNS, from one picture to another, for these pictures, which is in fact the absolute value of the NPNS gradient from one picture to another. The last line defines a first shot or sequence A up to the picture T-4 and a second shot or sequence B from the picture T-3.

$$V(T) = VAR\_NPNS\_T = |grad\ (NPNS)|$$

In the example represented in this figure 3, the number of non-static pixels changes slightly from the picture T-9 to the picture T-4 that corresponds to a same sequence A then from the picture T-2 to T which corresponds to a same sequence B. This NPNS number changes greatly for the picture T-3, translating into a shot change between the picture T-4 and the picture T-3, pictures that are taken into account for the calculation of this NPNS number of the picture T-3. It is noted that if for example the sequence A provides a small number of static pixels and if by chance the sequence B provide, in the sequence, this same number, the chances are that their static pixels of the corresponding second sequence, concerning their position in the picture, to those of the first sequence are very low and these static pixels will therefore be considered as non-static for the first picture T-3 of the sequence B.

The change in the variation of the number of non-static pixels in the sequence translates therefore to a high value for the signal V(T-3), that represents the variation in the number of non-static pixels between the picture T-4 and the picture T-3, attributed to T-3, and a high value for signal V(T-2), that represents the variation in the number of non-static pixels, between the picture T-3 and the picture T-2, attributed to T-2. The signal attributed to the picture T-1, V(T-1), again falls to a low value, NPNS(T-2) being little different to NPNS(T-1). A peak in the signal VAR_NPNS, during a scene change, is therefore noted, this signal being close to zero before the scene change and returning to a value close to zero after the scene change. This is due to the fact that it concerns a signal variation.

The decision and comparison circuit 7 that receives the signals V(T) to V(T-7) performs a comparison of signal V(T-3) with V(T-7), V(T-6), V(T-5) and V(T-4) then with V(T-1), V(T). It also performs a comparison of the signal V(T-2) with these same values. If the differences corresponding to these 12 comparisons are all greater than a predetermined threshold S2, this signifies that a peak in the variation of the number of non-static pixels was detected, distributed over the pictures T-3 and T-2, and that there is therefore a scene change between the pictures T-4 and T-3. The 3rd line of figure 3 clearly shows that if the 12 differences are greater than a threshold, this is translated by a value of V(T-3) and of V(T-2) greater than at least this threshold at each of the values V(T) of the other pictures, which corresponds to a difference in the number of non-static pixels, for the picture T-3, with respect to the other pictures.

In the example, the processing window considered is of 8 pictures, ranging from T-7 to T, the probability of shot change being calculated at picture level T-4 and T-3, enabling taking into account of the scenario prior to and subsequent to this hypothetical shot change. It is of course also conceivable, without leaving the domain of the invention, to consider windows of different sizes with shot change positions in the window, for the calculation of the differences, at different points.

The use of variation information rather than that of non-static pixel numbers enables display of the value of non-static pixel numbers, that is, to a certain extent, of motion. A homogenous motion in a sequence, whatever the value found of the number of non-static pixels, will provide a variation information of low value.

An improvement of this method is proposed below and concerns the circuits referenced 8 to 13 of figure 1.

The detection of non-static pixels is more delicate for sequences with little luminosity. In fact, the ranges of variation of luminance values being low, it is more delicate to distinguish the static areas from non-static areas by luminance correlation of windows. To support the shot change decision, to render it more reliable, the method implements an analysis of luminance on the pictures of the processing window.

The video source at the input of the device is transmitted to a picture luminance values extraction circuit referenced 8 then to a accumulator 9 that performs the sum of these luminance values on the picture, a picture reset input enabling the accumulator to be emptied for the processing of the following picture. This input is fed by the picture synchronisation signal. The information output from the accumulator 9 is transmitted to a succession of 8 elementary registers in series forming an 8 cell offset register 10. The picture synchronisation signals enable the transfer of this information from one register to another. The outputs of the 4 first elementary registers containing the luminance information for the pictures T-3 to T are transmitted to an averaging circuit 11 that provides the mean luminance values on these 4 pictures. The outputs of the 4 last elementary registers containing the luminance information for the pictures T-4 to T-7 are transmitted to an averaging circuit 12 that provides the mean luminance values on these 4 pictures.

Referring to figure 3, it then concerns, for these signals exiting circuits 11 and 12, a luminance information that is the mean relative to the 4 pictures of the sequence A, prior to the shot change that took place, in the calculation hypothesis, from picture T-3, and a luminance information that is the mean relative to the 4 pictures of the sequence B, subsequent to the shot change.

The output of the two averaging circuits 11 and 12 are transmitted to a subtracter 13 that subtracts one value from the other to transmit the result to a decision and comparison circuit input 7. This mean luminance difference information is used by the decision and comparison circuit to define the thresholds. If the mean luminance values are indeed different, this supports the shot change decision. If the mean luminance values are close, the threshold is modified. It concerns the threshold S2 relative to the 12 comparisons enabling the detection of a peak, value transmitted on an input to the decision and comparison circuit 7 and thus modified by this circuit according to this mean luminance difference.

It is of course conceivable to realise this mean on different numbers of pictures. The pictures taken into account, for a mean, must be exclusively, either before or after the tested border, that separating the pictures T-4 and T-3 in the example of figure 3.

In the case where the video sequence is constituted of a succession of interlaced fields, the delayed pictures are replaced by two field delays in order to effect a correlation between two fields of the same parity. The detection of non-static pixels is then made between fields of the same parity and not between successive pictures (frames) in the case of a progressive sequence. The modifications made to the diagram of figure 1 are understood by those skilled in the art and are therefore not detailed here.

The applications relate to video coding, for example video stream switches.

**Claims**

1. Method for the detection of changes of scene in a video picture sequence, **characterised in that** it comprises the following steps:

   - detection of non-static pixels (2) in a picture, with respect to a preceding picture,
   - calculation of the number of non-static pixels (3) in the picture,
   - calculation of the variation (5), in absolute value, of the number of non-static pixels for the picture, corresponding to the difference between the number of non-static pixels of the picture and that of the preceding picture,
   - detection of a peak in the variation (7), the picture relative to the variation leading to the peak then being the first picture of the new scene.

2. Method according to claim 1, **characterised in that** the peak detection step (7) comprises a calculation step of the difference of the variation for a picture with respect to at least one preceding picture and with respect to at least one following picture, the detection being obtained if the differences are greater than a predetermined threshold.

3. Method according to claim 2, **characterised in that** the calculations of difference (7) are carried out for pictures noted as T-(n-1) to T found inside a temporal sliding window bounding a predefined number of n pictures, a peak being declared when the difference, for a picture at a predefined position in the window and for the following picture is greater than a threshold, for the set of pictures in the window other than these two pictures.

4. Method according to claim 3, **characterised in that** the number n is equal to 8, the pictures of the window being pictures noted as T-7 to T, the two pictures being the pictures noted as T-3 and T-2.

5. Method according to claim 3, **characterised in that** the picture at a predefined position is the picture at position T-(n/2-1), **in that** a picture mean luminance is calculated (8, 9, 10) for the n/2 first pictures of the window and for the n/2 last pictures of the window, **in that** these mean luminance values are compared (13) and **in that** the threshold is a function of this comparison result.

6. Method according to claim 1, **characterised in that** the detection step of static areas comprises a comparison (2) of a block of pixels of a current picture with a co-localised block of a preceding picture and **in that** the central pixel of the block of the current picture is declared static if the sum of absolute values of pixel luminance differences relating to the neighbours of the central pixel is less than a predetermined threshold.

7. Method according to claim 6, **characterised in that** the block of pixels is a block of 3x3 pixels and the pixel at the centre is declared static if the sum of absolute values of differences carried out for the pixels around the pixel at the centre is less than a predetermined threshold.

8. Method according to claim 1, **characterised in that** the video picture sequence is a sequence of interlaced pictures and **in that** the detection of static areas is carried out on fields of the same parity.

**Patentansprüche**

1. Verfahren für die Erfassung von Änderungen der Szene in einer Videobildsequenz, **dadurch gekennzeichnet, dass** das Verfahren die folgenden Schritte umfasst:

   - Erfassung nicht statischer Pixel (2) in einem Bild in Bezug auf ein vorhergehendes Bild,
   - Berechnung der Anzahl nicht statischer Pixel (3) in dem Bild,
   - Berechnung der Änderung (5) des Absolutwerts der Anzahl nicht statischer Pixel für das Bild entsprechend der Differenz zwischen der Anzahl nicht statischer Pixel des Bilds und der des vorhergehenden Bilds,
   - Erfassung einer Spitze der Änderung (7), wobei das Bild bezüglich der Änderung, die zu der Spitze führt, daraufhin das erste Bild der neuen Szene ist.

2. Verfahren nach Anspruch 1, **dadurch gekennzeichnet, dass** der Spitzenerfassungsschritt (7) einen Berechnungsschritt der Differenz der Änderung für ein Bild in Bezug auf mindestens ein vorhergehendes Bild und in Bezug auf mindestens ein folgendes Bild umfasst, wobei die Erfassung erhalten wird, falls die Differenzen größer als ein vorgegebener Schwellenwert sind.

3. Verfahren nach Anspruch 2, **dadurch gekennzeichnet, dass** die Berechnungen der Differenz (7) für Bilder ausgeführt werden, die als T-(n-1) bis T notiert sind, die innerhalb eines zeitlichen Gleitfensters zu finden sind, das eine vorgegebene Anzahl von n Bildern begrenzt, wobei eine Spitze erklärt wird, wenn die Differenz für ein Bild an einem vorgegebenen Ort in dem Fenster und für das folgende Bild für den Satz von Bildern in dem Fenster außer diesen zwei Bildern größer als ein Schwellenwert ist.

4. Verfahren nach Anspruch 3, **dadurch gekennzeichnet, dass** die Anzahl n gleich 8 ist, wobei die Bilder des Fensters Bilder sind, die als T-7 bis T notiert sind, wobei die zwei Bilder die Bilder sind, die als T-3 und T-2 notiert sind.

5. Verfahren nach Anspruch 3, **dadurch gekennzeichnet, dass** das Bild an einem vorgegebenen Ort das Bild an dem Ort T-(n/2-1) ist, dass eine mittlere Farbdichte des Bilds für die n/2 ersten Bilder des Fensters und für die n/2 letzten Bilder des Fensters berechnet wird (8, 9, 10), dass diese mittleren Farbdichtewerte verglichen werden (13) und dass der Schwellenwert eine Funktion dieses Vergleichsergebnisses ist.

6. Verfahren nach Anspruch 1, **dadurch gekennzeichnet, dass** der Erfassungsschritt statischer Bereiche einen Vergleich (2) eines Blocks von Pixeln eines gegenwärtigen Bilds mit einem kolokalisierten Block eines vorhergehenden Bilds umfasst und dass das zentrale Pixel des Blocks des gegenwärtigen Bilds als statisch erklärt wird, falls die Summe der Absolutwerte der Pixelfarbdichtedifferenzen in Bezug auf die Nachbarn des zentralen Pixels kleiner als ein vorgegebener Schwellenwert ist.

7. Verfahren nach Anspruch 6, **dadurch gekennzeichnet, dass** der Block von Pixeln ein Block von 3 × 3 Pixeln ist und dass das Pixel im Zentrum als statisch erklärt wird, falls die Summe der Absolutwerte der Differenzen, ausgeführt für die Pixel um das Pixel in dem Zentrum, kleiner als ein vorgegebener Schwellenwert ist.

8. Verfahren nach Anspruch 1, **dadurch gekennzeichnet, dass** die Videobildsequenz eine Sequenz verschachtelter Bilder ist und dass die Erfassung statischer Bereiche an Teilbildern mit derselben Parität ausgeführt wird.

**Revendications**

1. Procédé de détection de changement de scène dans une séquence d'images vidéo, **caractérisé en ce qu'**il comporte les étapes suivantes :

   - détection des pixels non statiques (2) dans une image, par rapport à une image précédente,
   - calcul du nombre de pixels non statiques (3) dans l'image,
   - calcul de la variation (5), en valeur absolue, du nombre de pixels non statiques pour l'image, correspondant à la différence entre le nombre de pixels non statiques de l'image et celui de l'image précédente,

- détection d'un pic de la variation (7), l'image relative à la variation ayant entraîné le pic étant alors la première image de la nouvelle scène.

2. Procédé selon la revendication 1, **caractérisé en ce que** l'étape de détection de pic (7) comporte une étape de calcul de la différence de la variation pour une image par rapport à au moins une image précédente et par rapport à au moins une image suivante, la détection étant obtenue si les différences sont supérieures à un seuil prédéterminé.

3. Procédé selon la revendication 2, **caractérisé en ce que** les calculs de différence (7) sont effectués pour des images notées T-(n-1) à T se trouvant à l'intérieur d'une fenêtre glissante temporelle englobant un nombre prédéfini de n d'images, un pic étant déclaré lorsque la différence, pour une image à une position prédéfinie dans la fenêtre et pour l'image suivante est supérieure à un seuil, pour l'ensemble des images dans la fenêtre autres que ces deux images.

4. Procédé selon la revendication 3, **caractérisé en ce que** le nombre n est égal à 8, les images de la fenêtre étant les images notées T-7 à T, les deux images étant les images notées T-3 et T-2.

5. Procédé selon la revendication 3, **caractérisé en ce que** l'image à une position prédéfinie est l'image à la position T-(n/2-1), **en ce qu'**une luminance moyenne d'image est calculée (8, 9, 10) pour les n/2 premières images de la fenêtre et pour les n/2 dernières images de la fenêtre, **en ce que** ces luminances moyennes sont comparées (13) et **en ce que** le seuil est fonction de ce résultat de comparaison.

6. Procédé selon la revendication 1, **caractérisé en ce que** l'étape de détection de zones statiques comporte une comparaison (2) d'un bloc de pixels d'une image courante à un bloc colocalisé d'une image précédente et **en ce que** le pixel central du bloc de l'image courante est déclaré statique si la somme des valeurs absolues des différences de luminances de pixels concernant les voisins du pixel central est inférieure à un seuil prédéterminé.

7. Procédé selon la revendication 6, **caractérisé en ce que** le bloc de pixels est un bloc de 3x3 pixels et **en ce que** le pixel au centre est déclaré statique si la somme des valeurs absolues des différences effectuée pour les pixels autour du pixel au centre est inférieure à un seuil prédéterminé.

8. Procédé selon la revendication 1, **caractérisé en ce que** la séquence d'images vidéo est une séquence d'images entrelacées et **en ce que** la détection de zones statiques est effectuée sur des trames de même parité.

FIG.1

**FIG. 2**

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A survey of digital video shot boundary detection algorithms. **El-Qawasmeh et al.** Proceedings of the IASTED International Conference. Innsbruck, 18 February 2002, 497-502